# EUROPEAN PATENT APPLICATION

(11) **EP 4 418 798 A1**
(43) Date of publication of application: **21.08.2024**
(21) Application number: 22894575.4
(22) Date of filing: 24.10.2022
(51) Int. Cl.: H04W 74/08

(54) **SIDELINK COMMUNICATION METHOD AND RELATED APPARATUS**

(30) Priority: 17.11.2021 CN 202111359327; 19.08.2022 CN 202210997801
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: MERH-IP Matias Erny Reichl Hoffmann Patentanwälte PartG mbB
(86) International application number: PCT/CN2022/126998
(87) International publication number: WO 2023/088038

(57) **Abstract**

This application provides a sidelink communication method and a related apparatus. The method may include: A first terminal device determines first indication information, and sends first SCI including the first indication information to a second terminal device, where the first indication information is used to determine not to perform LBT on PSFCH resources; and when receiving the first SCI, the second terminal device determines, according to the first indication information included in the first SCI, not to perform LBT on the PSFCH resources. This application may be applied to a scenario in which SL communication is performed by using an unlicensed spectrum, to reduce power consumption of the second terminal device and improve SL communication quality.

## Description

This application claims priority to Chinese Patent Application No. 202111359327.4, filed with the China National Intellectual Property Administration on November 17, 2021 and entitled "SIDELINK COMMUNICATION METHOD AND RELATED APPARATUS", which is incorporated herein by reference in its entirety. This application claims priority to Chinese Patent Application No. 202210997801.4, filed with the China National Intellectual Property Administration on August 19, 2022 and entitled "SIDELINK COMMUNICATION METHOD AND RELATED APPARATUS", which is incorporated herein by reference in its entirety.

### TECHNICAL FIELD

This application relates to the field of communication technologies, and in particular, to a sidelink communication method and a related apparatus.

### BACKGROUND

In a wireless communication system, terminal devices may communicate with each other through a network device, or may directly communicate with each other without using a network device. During direct communication, a link between terminal devices may be referred to as a sidelink (sidelink, SL). A communication manner without using a network device may be referred to as SL communication. During SL communication, the terminal device may obtain SL resources through scheduling of the network device, or select SL resources from a configured SL resource pool.

In a scenario in which a terminal device communicates with a network device, used spectrum resources are classified into a licensed spectrum and an unlicensed spectrum. The licensed spectrum can be used by some organizations or operators. The unlicensed spectrum is a shared spectrum and can be used by any organization or operator. To fairly use the unlicensed spectrum, the terminal device and the network device need to perform listen before talk (listen before talk, LBT) before sending data. If the unlicensed spectrum is used, the terminal device performs LBT on a scheduled uplink resource, and when the LBT succeeds, performs uplink transmission by using the uplink resource.

In a scenario in which SL communication is performed by using an unlicensed spectrum, how to reduce power consumption of a terminal device is a technical problem to be urgently resolved.

### SUMMARY

Embodiments of this application provide a sidelink communication method and a related apparatus, to reduce power consumption of a terminal device.

According to a first aspect, this application provides a sidelink communication method. The method may be performed by a second terminal device or modules in the second terminal device. The method includes: receiving first sidelink control information (sidelink control information, SCI) from a first terminal device, where the first SCI includes first indication information, and the first indication information is used to determine not to perform listen before talk (listen before talk, LBT) on physical sidelink feedback channel (physical sidelink feedback channel, PSFCH) resources; and determining, according to the first indication information, not to perform LBT on the PSFCH resources.

It can be learned that the second terminal device does not perform LBT on the PSFCH resources according to the first indication information sent by the first terminal device, without performing LBT on PSFCH resources each time, so that power consumption of the second terminal device can be reduced, and retransmission of the first terminal device due to an LBT failure of the second terminal device can be avoided, thereby improving SL communication quality.

In a possible implementation, the first indication information indicates not to perform LBT on the PSFCH resources. The first indication information may be a bit. When the bit is carried, it is indicated not to perform LBT on the PSFCH resources; or when the bit is 1, it is indicated not to perform LBT on the PSFCH resources. This manner explicitly indicates not to perform LBT on the PSFCH resources, and is simple to implement.

In a possible implementation, after determining not to perform LBT on the PSFCH resources, the second terminal device directly sends hybrid automatic repeat request (hybrid automatic repeat request, HARQ) feedback information to the first terminal device by using the PSFCH resources. The second terminal device does not perform LBT on the PSFCH resources, and sends the HARQ feedback information by using the PSFCH resources, so that power consumption of the second terminal device can be reduced. This helps the first terminal device receive the HARQ feedback information in time.

In a possible implementation, the first indication information indicates not to send HARQ feedback information; and the second terminal device does not send the HARQ feedback information to the first terminal device. It is indicated not to send the HARQ feedback information, to implicitly indicate not to perform LBT on the PSFCH resources, so that signaling overheads can be reduced. In this manner, the second terminal device does not perform LBT on the PSFCH resources and does not send the HARQ feedback information by using the PSFCH resources.

In a possible implementation, the first SCI further includes second indication information, and the second indication information indicates not to send HARQ feedback information; and the second terminal device does not send the HARQ feedback information to the first terminal device. The first indication information indicates not to perform LBT on the PSFCH resources, and the second indication information indicates not to send the HARQ feedback information. In this manner, the second terminal device does not perform LBT on the PSFCH resources and does not send the HARQ feedback information by using the PSFCH resources.

In a possible implementation, the first indication information is further used to determine that LBT does not need to be performed on physical sidelink control channel (physical sidelink control channel, PSCCH) resources and/or physical sidelink shared channel (physical sidelink shared channel, PSSCH) resources occupied by the first SCI; and the second terminal device sends second SCI to a third terminal device by using the PSCCH resources and/or the PSSCH resources; and/or sends data to the third terminal device by using the PSSCH resources. In this manner, signaling overheads can be reduced, and utilization of the PSCCH resources and/or the PSSCH resources can be improved.

In a possible implementation, the first SCI further includes third indication information, and the third indication information is used to determine that LBT does not need to be performed on PSCCH resources and/or PSSCH resources occupied by the first SCI; and the second terminal device sends second SCI to a third terminal device by using the PSCCH resources and/or the PSSCH resources; and/or sends data to the third terminal device by using the PSSCH resources, thereby improving utilization of the PSCCH resources and/or the PSSCH resources.

In a possible implementation, the first SCI includes first stage SCI and second stage SCI. The first stage SCI includes the first indication information, so that the second terminal device can obtain the first indication information earlier; or the second stage SCI includes the first indication information, so that the second terminal device can obtain more accurate first indication information.

Optionally, the PSFCH resources are determined based on a relationship between PSSCH resources and the PSFCH resources. When the PSSCH resources are determined, the PSFCH resources may be determined based on the relationship between the PSSCH resources and the PSFCH resources, to help the first terminal device indicate the second terminal device not to perform LBT on the PSFCH resources.

Optionally, the method further includes: sending resource indication information to the second terminal device, where the resource indication information indicates the PSFCH resources.

According to a second aspect, this application provides a sidelink communication method. The method may be performed by a first terminal device or modules in the first terminal device. The method includes: determining first indication information, where the first indication information is used to determine not to perform LBT on PSFCH resources; and sending first SCI to a second terminal device, where the first SCI includes the first indication information.

It can be learned that the first terminal device sends, to the second terminal device, the first SCI including the first indication information, so that the second terminal device determines not to perform LBT on the PSFCH resources, thereby reducing power consumption of the second terminal device.

In a possible implementation, the first indication information indicates not to perform LBT on the PSFCH resources. This is an explicit indication, and is simple to implement.

In a possible implementation, the first terminal device determines the first indication information when gap resources are occupied, where the gap resources are resources between PSSCH resources and the PSFCH resources. The first terminal device may dynamically determine the first indication information depending on whether the gap resources are occupied, to dynamically indicate the second terminal device whether to perform LBT on the PSFCH resources.

In a possible implementation, the first terminal device determines the first indication information when a priority of receiving HARQ feedback information is relatively low. The first terminal device may dynamically determine the first indication information based on the priority of receiving the HARQ feedback information, to dynamically indicate the second terminal device whether to perform LBT on the PSFCH resources.

In a possible implementation, the first indication information indicates not to send the HARQ feedback information. It is indicated not to send the HARQ feedback information, to implicitly indicate not to perform LBT on the PSFCH resources, so that signaling overheads can be reduced.

In a possible implementation, the first SCI further includes second indication information, and the second indication information indicates not to send the HARQ feedback information. The first indication information indicates not to perform LBT on the PSFCH resources, and the second indication information indicates not to send the HARQ feedback information. In this manner, the second terminal device does not perform LBT on the PSFCH resources and does not send the HARQ feedback information by using the PSFCH resources.

In a possible implementation, the first indication information is further used to determine that LBT does not need to be performed on PSCCH resources and/or PSSCH resources occupied by the first SCI, so that the second terminal device sends second SCI to a third terminal device by using the PSCCH resources and/or the PSSCH resources; and/or sends data to the third terminal device by using the PSSCH resources. In this manner, signaling overheads can be reduced, and utilization of the PSCCH resources and/or the PSSCH resources can be improved.

In a possible implementation, the first SCI further includes third indication information, and the third indication information is used to determine that LBT does not need to be performed on PSCCH resources and/or PSSCH resources occupied by the first SCI, so that the second terminal device sends second SCI to a third terminal device by using the PSCCH resources and/or the PSSCH resources; and/or sends data to the third terminal device by using the PSSCH resources, thereby improving utilization of the PSCCH resources and/or the PSSCH resources.

In a possible implementation, the first terminal device obtains first configuration information, and determines the first indication information based on the first configuration information. The first terminal device may dynamically determine the first indication information by using the first configuration information, to dynamically indicate the second terminal device whether to perform LBT on the PSFCH resources.

In a possible implementation, the first configuration information includes a first logical channel priority; and the first indication information is determined if a minimum logical channel priority in data scheduled by using the first SCI is less than the first logical channel priority. A high-priority service is determined by using a logical channel priority. For the high-priority service, it is indicated not to perform LBT on the PSFCH resources, so that transmission performance of the high-priority service can be better ensured.

In a possible implementation, the first configuration information includes an SL media access control (media access control, MAC) control element (control element, CE) list; and the first indication information is determined if data scheduled by using the first SCI includes one or more SL MAC CEs in the SL MAC CE list. A transmission priority corresponding to an SL MAC CE in the SL MAC CE list is relatively high. For transmission including a high-priority SL MAC CE, it is indicated not to perform LBT on the PSFCH resources, so that transmission performance can be better ensured.

In a possible implementation, the first terminal device may obtain the first configuration information from a network device, for example, obtain the first configuration information from a radio resource control (radio resource control, RRC) message or a system information block (system information block, SIB) message sent by the network device, where the RRC message or the SIB message includes the first configuration information. The first terminal device dynamically indicates, based on the RRC message or the SIB message, the second terminal device not to perform LBT on the PSFCH resources.

In a possible implementation, the first terminal device obtains the first configuration information from a preconfigured message, where the preconfigured message may be from a core network element, or may be included in a chip of the first terminal device.

In a possible implementation, the first terminal device obtains the first configuration information from a predefined message.

In a possible implementation, the first SCI includes first stage SCI and second stage SCI. The first stage SCI includes the first indication information, so that the second terminal device can obtain the first indication information earlier; or the second stage SCI includes the first indication information, so that the second terminal device can obtain more accurate first indication information.

Optionally, the PSFCH resources are determined based on a relationship between PSSCH resources and the PSFCH resources. When the PSSCH resources are determined, the PSFCH resources may be determined based on the relationship between the PSSCH resources and the PSFCH resources, to help the second terminal device determine not to perform LBT on the PSFCH resources.

Optionally, the method further includes: receiving resource indication information from the first terminal device, where the resource indication information indicates the PSFCH resources.

According to a third aspect, this application provides a sidelink communication method. The method may be performed by a second terminal device or modules in the second terminal device. The method includes: receiving second configuration information from a first terminal device, where the second configuration information is used to determine not to perform LBT on PSFCH resources; and determining, according to the second configuration information, not to perform LBT on the PSFCH resources.

It can be learned that the second terminal device does not perform LBT on the PSFCH resources according to the second configuration information, without performing LBT on PSFCH resources each time, so that power consumption of the second terminal device can be reduced, and retransmission of the first terminal device due to an LBT failure of the second terminal device can be avoided, thereby improving SL communication quality.

In a possible implementation, the second configuration information includes a first logical channel priority; and the second terminal device receives data from the first terminal device; and if a minimum logical channel priority in the data is less than the first logical channel priority, determines not to perform LBT on the PSFCH resources. If the minimum logical channel priority in the data is less than the first logical channel priority, it may be considered that a service priority is relatively high. For a high-priority service, LBT is not performed on the PSFCH resources, so that transmission performance of the high-priority service can be better ensured.

In a possible implementation, the second configuration information includes an SL MAC CE list; and the second terminal device receives data from the first terminal device, and if the data includes one or more SL MAC CEs in the SL MAC CE list, determines not to perform LBT on the PSFCH resources. If the data includes one or more SL MAC CEs in the SL MAC CE list, it may be considered that a transmission priority is relatively high. For transmission including a high-priority SL MAC CE, LBT is not performed on the PSFCH resources, so that transmission performance can be better ensured.

In a possible implementation, the second terminal device receives a PC5-RRC message or a group PC5-RRC message from the first terminal device, where the PC5-RRC message or the group PC5-RRC message includes the second configuration information. In an SL communication scenario, the second configuration information is sent by using a unicast RRC message or a multicast RRC message, so that the second terminal device determines not to perform LBT on the PSFCH resources.

According to a fourth aspect, this application provides a sidelink communication method. The method may be performed by a first terminal device or modules in the first terminal device. The method includes: obtaining first configuration information; and sending second configuration information to a second terminal device, where the second configuration information includes the first configuration information, and the second configuration information is used to determine not to perform LBT on PSFCH resources.

It can be learned that the first terminal device sends the second configuration information to the second terminal device, so that the second terminal device determines not to perform LBT on the PSFCH resources, thereby reducing power consumption of the second terminal device.

In a possible implementation, the first terminal device may obtain the first configuration information from a network device, for example, obtain the first configuration information from an RRC message or a SIB message sent by the network device, where the RRC message or the SIB message includes the first configuration information. The first terminal device dynamically indicates, based on the RRC message or the SIB message, the second terminal device not to perform LBT on the PSFCH resources.

In a possible implementation, the first terminal device obtains the first configuration information from a preconfigured message, where the preconfigured message may be from a core network element, or may be included in a chip of the first terminal device.

In a possible implementation, the first terminal device obtains the first configuration information from a predefined message.

In a possible implementation, the first terminal device sends a PC5-RRC message or a group PC5-RRC message to the second terminal device, where the PC5-RRC message or the group PC5-RRC message includes the second configuration information. In an SL communication scenario, the second configuration information is sent by using a unicast RRC message or a multicast RRC message, so that the second terminal device determines not to perform LBT on the PSFCH resources.

Optionally, the PSFCH resources are determined based on a relationship between PSSCH resources and the PSFCH resources. When the PSSCH resources are determined, the PSFCH resources may be determined based on the relationship between the PSSCH resources and the PSFCH resources, to help the second terminal device determine not to perform LBT on the PSFCH resources.

Optionally, the method further includes: receiving resource indication information from the first terminal device, where the resource indication information indicates the PSFCH resources.

According to a fifth aspect, this application provides a communication apparatus. The communication apparatus may be a second terminal device, or may be an apparatus in the second terminal device, or an apparatus that can be used in a matching manner with the second terminal device. The communication apparatus may alternatively be a chip system. The communication apparatus may perform the method according to the first aspect or the third aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects, refer to the method and beneficial effects in the first aspect or the third aspect.

According to a sixth aspect, this application provides a communication apparatus. The communication apparatus may be a first terminal device, or may be an apparatus in the first terminal device, or an apparatus that can be used in a matching manner with the first terminal device. The communication apparatus may alternatively be a chip system. The communication apparatus may perform the method according to the second aspect or the fourth aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects, refer to the method and beneficial effects in the second aspect or the fourth aspect.

According to a seventh aspect, this application provides a communication apparatus. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to any one of the first aspect to the fourth aspect by using a logic circuit or by executing code instructions.

According to an eighth aspect, this application provides a computer-readable storage medium. The storage medium stores a computer program or instructions, and when the computer program or instructions are executed by a communication apparatus, the method according to any one of the first aspect to the fourth aspect is implemented.

According to a ninth aspect, this application provides a computer program product including instructions. When a communication apparatus reads and executes the instructions, the communication apparatus is enabled to perform the method according to any one of the first aspect to the fourth aspect.

According to a tenth aspect, this application provides a communication system, including at least one communication apparatus configured to perform the method in the first aspect and at least one communication apparatus configured to perform the method in the second aspect, or including at least one communication apparatus configured to perform the method in the third aspect and at least one communication apparatus configured to perform the method in the fourth aspect.

### BRIEF DESCRIPTION OF DRAWINGS

FIG. 1 is a schematic flowchart of performing uplink transmission by using an unlicensed spectrum;
FIG. 2 is a diagram of SL communication;
FIG. 3 is a diagram of a relationship between PSSCH resources and PSFCH resources;
FIG. 4 is a schematic flowchart of transmitting HARQ feedback information;
FIG. 5 is a diagram of a system architecture to which embodiments of this application are applied;
FIG. 6 is a schematic flowchart of a sidelink communication method according to an embodiment of this application;
FIG. 7 is a schematic flowchart of another sidelink communication method according to an embodiment of this application;
FIG. 8 is a schematic flowchart of still another sidelink communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

First, related concepts in this application are described.

### 1. Listen before talk LBT

Usually, LBT is performed at a granularity of a channel (for example, 20 MHz). Before sending a signal on a channel, a communication device (for example, a terminal device or a network device) detects whether the channel is clear, for example, detects whether another communication device is occupying the channel to send a signal. The detection process may be referred to as an LBT process, a channel access process, or a clear channel assessment (clear channel assessment, CCA) process. There are two types of LBT processes: a first-type LBT process and a second-type LBT process.

The first-type LBT process is energy detection based on fixed duration. Specifically, for a channel such as 20 MHz, if energy of a signal received by the communication device within the fixed duration is less than or equal to a first threshold, it is determined that the channel is clear, and in this case, the communication device can use the clear channel to transmit data; on the contrary, it is determined that the channel is busy, and in this case, the communication device does not use the busy channel to transmit data. The first threshold may be predefined, for example, predefined in a protocol.

The second-type LBT process is energy detection based on a backoff mechanism. Specifically, a window is defined, and the window defines a range of a quantity of detected slots. For a channel such as 20 MHz, the communication device randomly selects a value A from the window. If it is detected that at least A slots meet clear energy detection, it is determined that the channel is clear, and in this case, the communication device can use the clear channel to transmit data; on the contrary, it is determined that the channel is busy, and in this case, the communication device does not use the busy channel to transmit data. The clear energy detection means that energy of a signal received within fixed duration is less than or equal to a second threshold, and the second threshold may be predefined, for example, predefined in a protocol. The second threshold may be the same as or different from the first threshold.

Two results may be obtained by performing the LBT process: One result is that LBT succeeds (also referred to as that the channel access process is completed), and the other result is that LBT fails (also referred to as that the channel access process is not completed). There are a plurality of time domain start locations in time-frequency resources used for data transmission. If it is determined, before any time domain start location, that the channel is clear, LBT succeeds; or if it is determined, before all the time domain start locations, that the channel is busy, LBT fails.

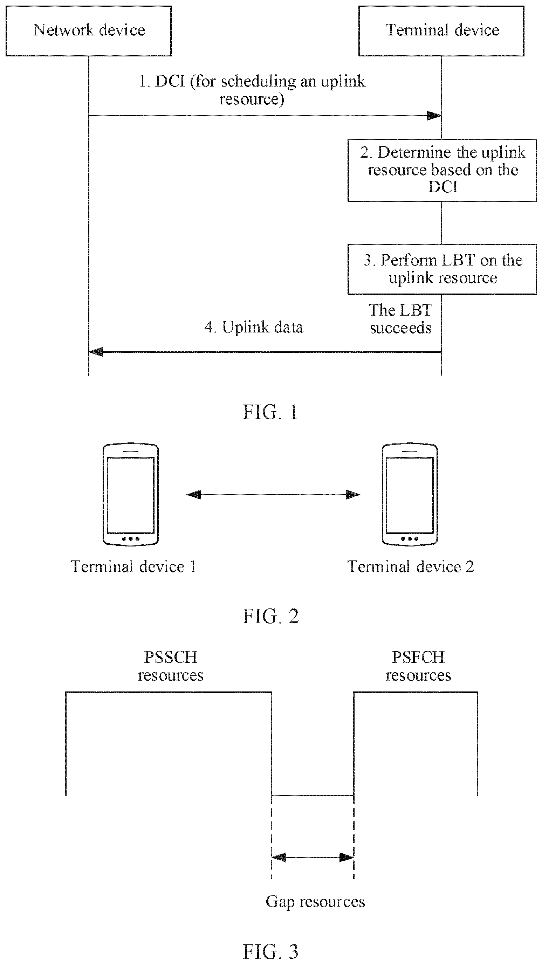

In a scenario in which communication is performed by using a licensed spectrum, the network device schedules an uplink resource for the terminal device by using downlink control information (downlink control information, DCI), and the terminal device can directly use the uplink resource to send uplink data. In a scenario in which communication is performed by using an unlicensed spectrum, the network device schedules an uplink resource for the terminal device by using DCI, and the terminal device performs LBT on the uplink resource. When the LBT succeeds, the terminal device uses the uplink resource to send uplink data, as shown in FIG. 1. When the LBT fails, the terminal device cannot use the uplink resource to send uplink data.

### 2. SL communication

In SL communication, terminal devices communicate with each other through an SL without using a network device, as shown in FIG. 2. An interface between terminal devices is referred to as a PC5 interface, and SL communication may also be referred to as PC5 communication. SL communication supports unicast communication, multicast communication, and broadcast communication. In this application, unicast communication is unicast communication in SL communication, and multicast communication is multicast communication in SL communication. This application relates to unicast communication and multicast communication.

Unicast communication is similar to data communication performed between a terminal device and a network device based on an established RRC connection. A unicast connection is established between two terminal devices. After the unicast connection is established, data communication is performed based on a negotiated identifier, and data may be encrypted or may not be encrypted. Unicast communication is performed based on the established unicast connection, while no unicast connection needs to be established in broadcast communication. In unicast communication, when sending data, the terminal device sends a source identifier and a destination identifier along with the data. The source identifier is allocated by a transmitting end, and the destination identifier is allocated by a peer terminal device for the unicast connection.

In multicast communication, group creation and maintaining are completed by an upper layer. The upper layer is a layer above an access layer, for example, a PC5-S layer or a vehicle-to-everything (vehicle-to-everything, V2X) layer. In multicast communication, when sending data, the terminal device sends a source identifier and a destination identifier along with the data. The source identifier is allocated by a transmitting end, and the destination identifier is obtained by converting a group identifier.

### 3. SL resource

In SL communication, a terminal device may obtain SL resources in a mode (mode) 1 or a mode 2. The mode 1 is a network device scheduling mode, and the mode 2 is an autonomous contention mode. When working in the mode 1, the terminal device may obtain SL resources from a network device. For example, the network device may schedule the SL resources for the terminal device by using DCI, or may configure an SL configured grant (configured grant) for the terminal device by using an RRC message. When working in the mode 2, the terminal device may receive an SL resource pool configuration from a network device or obtain an SL resource pool configuration from a preconfigured message, and select SL resources from an SL resource pool for sending. The selection may be performed randomly, or may be performed based on a result of sensing (sensing) or partial sensing (partial sensing). The SL resource may include but is not limited to one or more of a time domain resource, a frequency domain resource, and a space domain resource. This application relates to the time domain resource.

The SL resource in this application includes a PSSCH resource, a PSCCH resource, and a PSFCH resource. The PSCCH resource and the PSSCH resource may be used to transmit SCI, and the PSSCH resource is further used to transmit data. The PSFCH resource may be used to transmit HARQ feedback information.

In an implementation, for a relationship between PSSCH resources and PSFCH resources, refer to FIG. 3. A receiving end transmits a PSFCH in the first slot that includes PSFCH resources, where a gap between the first slot that includes the PSFCH resource and the last slot (slot) that includes PSSCH resources is n slots. It may be understood that the last slot that includes the PSSCH resources and the first slot that includes the PSFCH resources are separated by the n slots. The n slots may be described as sl-MinTimeGapPSFCH, and are configured in a resource pool, for example, may be two or three slots. In this application, resources corresponding to sl-MinTimeGapPSFCH are described as gap resources. Based on the relationship between the PSSCH resources and the PSFCH resources, the PSFCH resources may be understood as PSFCH resources corresponding to or associated with the PSSCH resources, PSFCH resources corresponding to or associated with SCI, PSFCH resources corresponding to or associated with data, or PSFCH resources corresponding to or associated with data scheduled by using SCI.

In another implementation, PSFCH resources may alternatively be indicated by a transmitting end (also described as TX UE). For example, the transmitting end sends indication information to a receiving end, and the indication information indicates the PSFCH resources.

In still another implementation, PSFCH resources may alternatively be determined by a receiving end (also described as RX UE). When the PSFCH resources are determined by the receiving end, the receiving end may further indicate the PSFCH resources to a transmitting end. In other words, the receiving end notifies the transmitting end of the PSFCH resources determined by the receiving end.

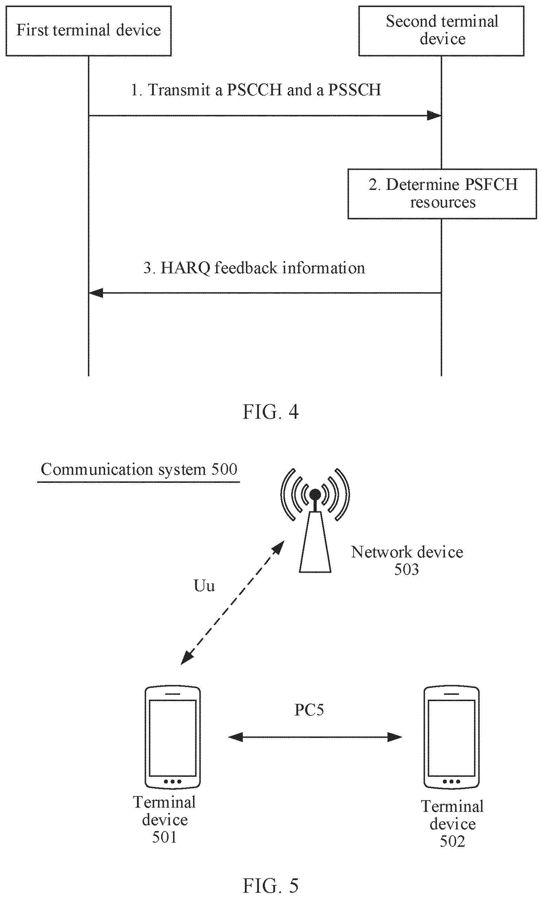

In a scenario in which SL communication is performed by using a licensed spectrum, an SL grant resource may be obtained through scheduling of a network device, or may be obtained from a configured resource pool. The SL grant resource may be used to determine a set (a set) of PSCCH durations and a set of PSSCH durations. PSFCH resources may be determined by the terminal device without obtaining an SL grant in advance, but are determined by using associated PSSCH resources. For example, the PSFCH resources are determined by using the relationship shown in FIG. 3. For example, FIG. 4 is a diagram of transmitting HARQ feedback information. After a first terminal device transmits a PSCCH and a PSSCH, for example, SCI and data, to a second terminal device, the second terminal device determines PSFCH resources based on locations of PSSCH resources and sl-MinTimeGapPSFCH configured in a resource pool, to send HARQ feedback information to the first terminal device by using the PSFCH resources. Correspondingly, the first terminal device also determines the PSFCH resources according to the same method, and receives the HARQ feedback information on the PSFCH resources.

### 4. Sidelink control information SCI

The SCI is control information on a sidelink, and may be used to carry control information and schedule data. The SCI includes first stage (first stage) SCI and second stage (second stage) SCI. The first stage SCI is carried on a PSCCH, and the second stage SCI is carried on a PSSCH. The first stage SCI may indicate a time-frequency resource for PSSCH transmission, and the second stage SCI may indicate whether HARQ feedback (feedback) information is enabled (enabled) or disabled (disabled).

### 5. HARQ feedback information

The HARQ feedback information is transmitted by using PSFCH resources. In SL communication, the HARQ feedback information is enabled or disabled.

Second, a system architecture in this application is described.

This application may be applied to a 5th generation (5th generation, 5G) system, which may also be referred to as a new radio (new radio, NR) system, a 6th generation (6th generation, 6G) system, a 7th generation (7th generation, 7G) system, or another future communication system, or may be further applied to a device to device (device to device, D2D) system, a machine to machine (machine to machine, M2M) system, a vehicle to everything (vehicle to everything, V2X) system, and the like.

This application may be applied to a system architecture shown in FIG. 5. A communication system 500 shown in FIG. 5 may include but is not limited to one or more terminal devices (for example, a terminal device 501 and a terminal device 502) and one or more network devices (for example, a network device 503). Terminal devices may communicate with each other through a PC5 interface, and a terminal device may communicate with a network device through a Uu interface.

The network device may be a device having a wireless transceiver function or a chip that can be disposed in the device. The network device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), or the like. Alternatively, the network device may be a device used in a 5G, 6G, or even 7G system, for example, a gNB in an NR system, or may be a roadside unit (roadside unit, RSU) in a V2X or intelligent driving scenario.

The terminal device may include but is not limited to user equipment (user equipment, UE), an access terminal, a subscriber unit, a subscriber station, a mobile station, a remote station, a remote terminal, a mobile device, a user terminal, a user agent, a user apparatus, or the like. For another example, the terminal device may be a mobile phone, a tablet computer, a computer with a wireless transceiver function, a terminal device in virtual reality, a terminal device in augmented reality, a wireless terminal in industrial control, a wireless terminal in unmanned driving, a wireless terminal in telemedicine, a wireless terminal in a smart grid, a wireless terminal in transportation security, a wireless terminal in a smart city, a wireless terminal in a smart home, a wireless terminal in the foregoing V2X vehicle-to-everything, or the like. In this application, the terminal device is especially a device that can perform SL communication, for example, a vehicle-mounted terminal, or a handheld terminal that can perform V2X communication.

In this application, the network device provides an SL resource pool configuration for the terminal device. When the terminal device works in a mode 1, the network device may schedule SL resources for the terminal device by using DCI, or may provide an SL configured grant for the terminal device by using an RRC message. The terminal device 501 is a transmitting end in SL communication, namely, the following first terminal device, and may work in the mode 1 or may work in a mode 2. When obtaining SL resources, the terminal device 501 may send SCI to the terminal device 502 by using the SL resources. The terminal device 502 is a receiving end in SL communication, namely, the following second terminal device. When receiving the SCI from the terminal device 501, the terminal device 502 may send HARQ feedback information to the terminal device 501 by using PSFCH resources. A communication manner between the terminal device 501 and the terminal device 502 may be unicast communication or multicast communication.

This application may be applied to a scenario in which SL communication is performed by using an unlicensed spectrum. The terminal device 501 uses the SCI to carry indication information, to indicate the terminal device 502 not to perform LBT on the PSFCH resources. Alternatively, the terminal device 501 obtains configuration information, and sends the configuration information to the terminal device 502, and the terminal device 502 determines, based on the configuration information, not to perform LBT on the PSFCH resources. Compared with a solution in which the terminal device 502 performs LBT on the PSFCH resources by default, in this application, power consumption of the terminal device 502 can be reduced, and data retransmission of the terminal device 501 due to an LBT failure of the terminal device 502 can be avoided, thereby improving SL communication quality.

The scenario in which SL communication is performed by using an unlicensed spectrum may include but is not limited to a scenario in which UE performs SL communication with UE in a V2X scenario, a scenario in which remote (remote) UE performs SL communication with relay (relay) UE in an SL UE-to-network relay (network relay) scenario, a scenario in which source (source) UE performs SL communication with relay UE and the relay UE performs SL communication with target (target) UE in an SL UE-to-UE relay scenario, or the like.

Further, technical solutions of this application are described.

For ease of clearly describing the technical solutions of this application, in this application, words such as "first" and "second" are used to distinguish between same items or similar items that have basically the same functions and effects. A person skilled in the art may understand that the words such as "first" and "second" do not limit a quantity or an execution sequence, and the words such as "first" and "second" do not indicate a definite difference. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

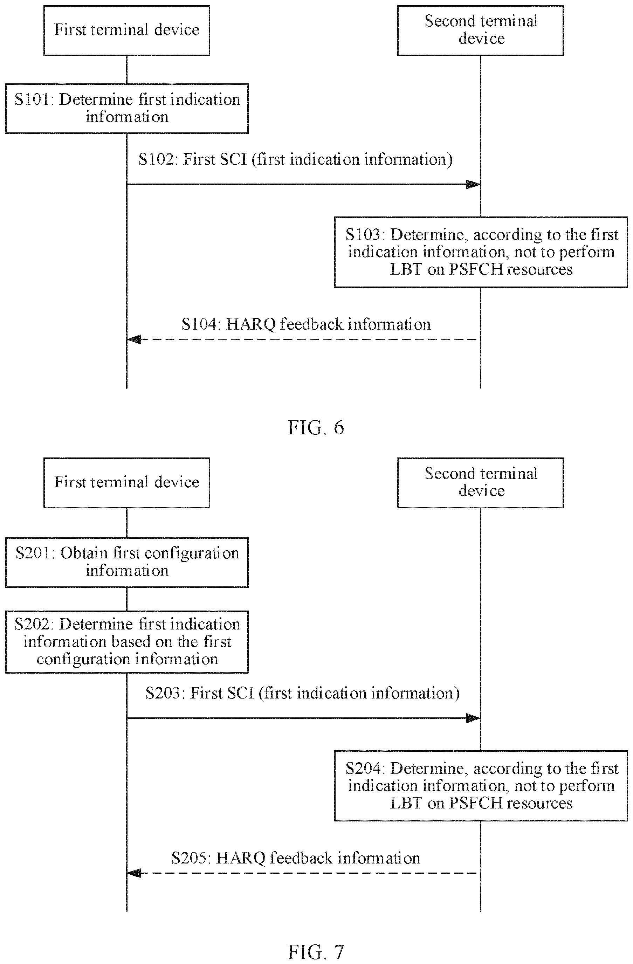

FIG. 6 is a schematic flowchart of a sidelink communication method according to an embodiment of this application. As shown in FIG. 6, the sidelink communication method includes but is not limited to the following steps.

S101: A first terminal device determines first indication information.

The first indication information is used to determine not to perform LBT on PSFCH resources, and is specifically used by a second terminal device to determine not to perform LBT on the PSFCH resources. That LBT is not performed on the PSFCH resources may also be described as that LBT is not performed on PSFCH transmission, LBT is not performed on a PSFCH, LBT is not performed on a PSFCH corresponding to data, LBT is not performed on a PSFCH corresponding to first SCI, LBT is not performed on a PSFCH corresponding to a PSSCH, or the like. In this application, SCI sent by the first terminal device to the second terminal device is referred to as first SCI, and SCI sent by the second terminal device to a third terminal device is referred to as second SCI.

Optionally, the PSFCH resources are PSFCH resources determined based on a relationship between PSSCH resources and PSFCH resources, or PSFCH resources indicated by the first terminal device. In other words, the PSFCH resources herein do not include PSFCH resources determined by a receiving end (that is, the second terminal device).

The first indication information may explicitly indicate the second terminal device not to perform LBT on the PSFCH resources. For example, the first indication information is a bit. When a value of the bit is 1, the second terminal device is indicated not to perform LBT on the PSFCH resources; or when a value of the bit is 0, the second terminal device is indicated not to perform LBT on the PSFCH resources. For another example, the first indication information is a bit. When the bit exists, the second terminal device is indicated not to perform LBT on the PSFCH resources; or when the bit does not exist, the second terminal device is indicated to perform LBT on the PSFCH resources. Alternatively, the first indication information may explicitly indicate the second terminal device whether to perform LBT on the PSFCH resources. For example, the first indication information is a bit. When a value of the bit is 1, the second terminal device is indicated not to perform LBT on the PSFCH resources; or when a value of the bit is 0, the second terminal device is indicated to perform LBT on the PSFCH resources. Alternatively, when a value of the bit is 0, the second terminal device is indicated not to perform LBT on the PSFCH resources; or when a value of the bit is 1, the second terminal device is indicated to perform LBT on the PSFCH resources.

The first indication information may implicitly indicate the second terminal device not to perform LBT on the PSFCH resources, that is, indirectly indicate, by indicating another action, not to perform LBT on the PSFCH resources. Optionally, the first indication information indicates not to send HARQ feedback information, that is, indicates the second terminal device not to send the HARQ feedback information to the first terminal device. It may be understood that, if the HARQ feedback information does not need to be sent, LBT does not need to be performed on the PSFCH resources, and the PSFCH resources do not need to be sensed. For example, the first indication information is a bit. When a value of the bit is 1, the second terminal device is explicitly indicated not to send the HARQ feedback information, and the second terminal device is implicitly indicated not to perform LBT on the PSFCH resources; or when a value of the bit is 0, the second terminal device is implicitly indicated to perform LBT on the PSFCH resources. For another example, the first indication information is a bit. When the bit exists, the second terminal device is explicitly indicated not to send the HARQ feedback information, and the second terminal device is implicitly indicated not to perform LBT on the PSFCH resources; on the contrary, the second terminal device is implicitly indicated to perform LBT on the PSFCH resources. Alternatively, the first indication information may indicate the second terminal device whether to send the HARQ feedback information. The first indication information is a bit. When a value of the bit is 1, the second terminal device is explicitly indicated not to send the HARQ feedback information, and the second terminal device is implicitly indicated not to perform LBT on the PSFCH resources; or when a value of the bit is 0, the second terminal device is explicitly indicated to send the HARQ feedback information, and the second terminal device is implicitly indicated to perform LBT on the PSFCH resources.

The first terminal device may determine the first indication information in one of the following several manners.

Manner 1: When determining that gap resources are occupied, the first terminal device determines that the second terminal device does not need to perform LBT on the PSFCH resources, to determine the first indication information. The gap resources are resources between PSSCH resources and the PSFCH resources, and may be specifically resources between PSSCH resources included in the first SCI and PSFCH resources corresponding to data scheduled by using the first SCI. Refer to FIG. 3. A slot quantity of the gap resources may be configured in a resource pool, for example, may be two or three slots. The gap resources are occupied. It may be understood that the first terminal device uses the gap resources to send signaling or data to another terminal device other than the second terminal device, for example, send data to the third terminal device. In this case, the second terminal device may directly use the PSFCH resources to perform PSFCH transmission. Alternatively, it may be understood that the first terminal device needs to send signaling or data to another terminal device other than the second terminal device within time corresponding to the gap resources. That the gap resources are occupied may be that all gap resources are occupied, for example, two slots configured in the resource pool are occupied; or may be that some gap resources are occupied, for example, the first two or last two slots in three slots configured in the resource pool are occupied. In this manner, the first indication information may explicitly indicate the second terminal device not to perform LBT on the PSFCH resources.

Manner 2: When determining that a priority of receiving the HARQ feedback information is relatively low, the first terminal device determines that the second terminal device does not need to perform LBT on the PSFCH resources, to determine the first indication information. For the first terminal device, that the priority of receiving the HARQ feedback information is relatively low may be that the priority of receiving the HARQ feedback information is so low that the HARQ feedback information cannot be received; may be that a priority of performing another action (for example, sending information or data) is higher than the priority of receiving the HARQ feedback information; may be that a value of the priority of receiving the HARQ feedback information is less than a threshold or a receiving priority defined in a protocol, where the threshold may be predefined in a protocol; or may be that a system or a user adjusts the priority of receiving the HARQ feedback information from a high priority to a low priority, or the like. In this manner, the first indication information may implicitly indicate the second terminal device not to perform LBT on the PSFCH resources, or the first indication information may explicitly indicate the second terminal device not to perform LBT on the PSFCH resources. Other indication information indicates the second terminal device not to send the HARQ feedback information, and the other indication information may be referred to as second indication information.

Manner 3: The first terminal device obtains first configuration information, and determines the first indication information based on the first configuration information. For this manner, refer to an embodiment shown in FIG. 7.

S102: The first terminal device sends the first SCI to the second terminal device. Correspondingly, the second terminal device receives the first SCI from the first terminal device. The first SCI includes the first indication information.

In a first implementation, the first SCI includes the first indication information, and the first indication information explicitly indicates the second terminal device not to perform LBT on the PSFCH resources.

In a second implementation, the first SCI includes the first indication information, and the first indication information explicitly indicates the second terminal device not to send the HARQ feedback information and implicitly indicates the second terminal device not to perform LBT on the PSFCH resources. The implicit indication can reduce signaling overheads.

In a third implementation, the first SCI includes the first indication information, and the first indication information indicates the second terminal device not to perform LBT on the PSFCH resources and is further used by the second terminal device to determine that LBT does not need to be performed on PSCCH resources and/or PSSCH resources occupied by the first SCI. Specifically, the first indication information is further used by the second terminal device to determine some or all PSCCH resources and/or some or all PSSCH resources occupied by the first SCI. It may be understood that a specific quantity of some PSCCH resources and/or a specific quantity of some PSSCH resources may be determined by using the first indication information. Example 1: The first indication information indicates that LBT does not need to be performed on the first half of the PSCCH resources and/or the second half of the PSSCH resources. Example 2: The first indication information indicates that LBT does not need to be performed in the first m time units in the PSCCH resources and/or the last n time units in the PSSCH resources. Herein, m and n are positive integers, and may be the same or different. The time unit may be a frame, a subframe, a slot, a symbol, or the like. Example 3: The first indication information indicates a percentage of PSCCH resources on which LBT does not need to be performed in the PSCCH resources, and/or a percentage of PSSCH resources on which LBT does not need to be performed in the PSSCH resources. The example 1 to the example 3 are examples, and some PSCCH resources and/or some PSSCH resources may be indicated in another manner.

When the first SCI occupies some or all PSCCH resources and/or some or all PSSCH resources, the second terminal device may perform a corresponding operation based on a specific case, as follows:
(1) When the first SCI occupies some PSCCH resources, the second terminal device may directly send second SCI to the third terminal device by using the PSCCH resources without performing LBT on the PSCCH resources.
(2) When the first SCI occupies all PSCCH resources, the second terminal device may directly send second SCI to the third terminal device by using all the PSCCH resources without performing LBT on any one of the PSCCH resources.
(3) When the first SCI occupies some PSSCH resources, the second terminal device may directly send data to the third terminal device by using the PSSCH resources without performing LBT on the PSSCH resources.
(4) When the first SCI occupies all PSSCH resources, the second terminal device may directly send data to the third terminal device by using all the PSSCH resources without performing LBT on any one of the PSSCH resources.
(5) When the first SCI occupies some PSCCH resources and some PSSCH resources, the second terminal device may directly send second SCI to the third terminal device by using the PSCCH resources without performing LBT on the PSCCH resources.
(6) When the first SCI occupies some PSCCH resources and some PSSCH resources, the second terminal device may directly send data to the third terminal device by using the PSCCH resources without performing LBT on the PSCCH resources.
(7) When the first SCI occupies all PSCCH resources and all PSSCH resources, the second terminal device may directly send second SCI to the third terminal device by using all the PSCCH resources without performing LBT on any one of the PSCCH resources.
(8) When the first SCI occupies all PSCCH resources and all PSSCH resources, the second terminal device may directly send data to the third terminal device by using all the PSCCH resources without performing LBT on any one of the PSCCH resources.

In the first to the third implementations, the first indication information may be carried in first stage SCI of the first SCI, so that the second terminal device can obtain the first indication information earlier; or carried in second stage SCI of the first SCI, so that the first indication information obtained by the second terminal device is more accurate.

In a fourth implementation, the first SCI includes the first indication information and the second indication information, the first indication information explicitly indicates the second terminal device not to perform LBT on the PSFCH resources, and the second indication information explicitly indicates not to send the HARQ feedback information. The two pieces of indication information are used for separate indication. This is distinct. The first indication information may be carried in first stage SCI or second stage SCI of the first SCI, and the second indication information may be carried in the first stage SCI or the second stage SCI of the first SCI. The second indication information is carried in the first stage SCI, so that the second terminal device can obtain the second indication information earlier; or the second indication information is carried in the second stage SCI, so that the second indication information obtained by the second terminal device is more accurate.

In a fifth implementation, the first SCI includes the first indication information and third indication information, the first indication information explicitly indicates the second terminal device not to perform LBT on the PSFCH resources, and the third indication information is used by the second terminal device to determine some or all PSCCH resources and/or some or all PSSCH resources occupied by the first SCI. It may be understood that a specific quantity of some PSCCH resources and/or a specific quantity of some PSSCH resources may be determined by using the third indication information. For the third indication information, refer to the descriptions in the example 1 to the example 3 in the third implementation. The two pieces of indication information are used for separate indication. This is distinct. The first indication information may be carried in first stage SCI or second stage SCI of the first SCI, and the third indication information may be carried in the first stage SCI or the second stage SCI of the first SCI. The third indication information is carried in the first stage SCI, so that the second terminal device can obtain the third indication information earlier; or the third indication information is carried in the second stage SCI, so that the third indication information obtained by the second terminal device is more accurate.

S103: The second terminal device determines, according to the first indication information, not to perform LBT on the PSFCH resources.

For the first implementation, the third implementation, and the fifth implementation, when receiving the first SCI, the second terminal device determines, according to the first indication information included in the first SCI, not to perform LBT on the PSFCH resources, and directly sends the HARQ feedback information to the first terminal device by using the PSFCH resources, that is, performs S 104. If the first SCI does not include the first indication information, or the first indication information indicates to perform LBT on the PSFCH resources, the second terminal device performs LBT on the PSFCH resources; and when the LBT succeeds, sends the HARQ feedback information to the first terminal device by using the PSFCH resources.

For the second implementation and the fourth implementation, when receiving the first SCI, the second terminal device does not send the HARQ feedback information to the first terminal device and does not perform LBT on the PSFCH resources.

Optionally, in S104, the second terminal device sends the HARQ feedback information to the first terminal device by using the PSFCH resources. Correspondingly, the first terminal device receives the HARQ feedback information from the second terminal device by using the PSFCH resources.

The first terminal device may determine the PSFCH resources based on the relationship between the PSFCH resources and the PSSCH resources, and receive the HARQ feedback information from the second terminal device by using the PSFCH resources.

In the embodiment shown in FIG. 6, the first terminal device sends the first indication information to the second terminal device, to indicate the second terminal device not to perform LBT on PSFCH resources corresponding to a current time of data transmission, thereby implementing dynamic indication. The second terminal device does not need to perform LBT on PSFCH resources each time of data transmission, so that power consumption of the second terminal device can be reduced, and data retransmission of the first terminal device due to an LBT failure of the second terminal device can be avoided, thereby improving SL communication quality.

FIG. 7 is a schematic flowchart of another sidelink communication method according to an embodiment of this application. As shown in FIG. 7, the sidelink communication method includes but is not limited to the following steps.

S201: A first terminal device obtains first configuration information.

The first configuration information is used to determine not to perform LBT on PSFCH resources, or determine whether to perform LBT on PSFCH resources.

In an implementation, the first configuration information includes a first logical channel priority. The first logical channel priority may be understood as a threshold, and is used to determine a service priority corresponding to data scheduled by using first SCI. If a minimum logical channel priority in the data scheduled by using the first SCI is less than the first logical channel priority, it may be considered that the service priority corresponding to the data scheduled by using the first SCI is high, and the first terminal device can indicate a second terminal device not to perform LBT on PSFCH resources corresponding to the data. Specifically, an SL MAC protocol data unit (protocol data unit, PDU) in the data includes one or more logical channel prioritys. Optionally, the first configuration information includes a threshold range or a threshold list. If a minimum logical channel priority in the data scheduled by using the first SCI falls within the threshold range or the threshold list, it may be considered that the service priority corresponding to the data scheduled by using the first SCI is high, and the first terminal device can indicate a second terminal device not to perform LBT on PSFCH resources corresponding to the data. The first SCI is SCI to be sent by the first terminal device to the second terminal device. In this manner, the service priority is determined by using the logical channel priority included in the first configuration information. Alternatively, the service priority may be determined in another manner. For example, the first configuration information includes a service priority threshold. If a service priority corresponding to the data scheduled by using the first SCI is greater than the service priority threshold, LBT is not performed on PSFCH resources corresponding to the data.

In another implementation, the first configuration information includes an SL MAC CE list. The SL MAC CE list includes one or more SL MAC CEs, and is used to determine a transmission priority corresponding to data scheduled by using first SCI. If the data scheduled by using the first SCI includes one or more SL MAC CEs in the SL MAC CE list, it may be considered that the transmission priority corresponding to the data scheduled by using the first SCI is high, and the first terminal device can indicate a second terminal device not to perform LBT on PSFCH resources corresponding to the data. Specifically, an SL MAC protocol data unit (protocol data unit, PDU) in the data includes the one or more SL MAC CEs in the SL MAC CE list. Optionally, the SL MAC CE list may be represented in another form, for example, an SL MAC CE range.

The first terminal device may obtain the first configuration information from a network device, for example, an RRC message or a SIB message sent by the network device carries the first configuration information, so that the second terminal device can be dynamically indicated, based on a configuration of the network device, not to perform LBT on PSFCH resources corresponding to a current time of data transmission. Optionally, the first terminal device obtains the first configuration information from a preconfigured message, where the preconfigured message is from a core network element, so that the second terminal device can be dynamically indicated, based on a configuration of the core network element, not to perform LBT on PSFCH resources corresponding to a current time of data transmission; or the preconfigured message is written into a chip of the first terminal device, to quickly determine first indication information. Optionally, the first terminal device obtains the first configuration information from a predefined message, where the predefined message may be predefined in a protocol, to quickly determine first indication information.

S202: The first terminal device determines the first indication information based on the first configuration information.

In an implementation, the first configuration information includes the first logical channel priority, and if the minimum logical channel priority in the data scheduled by using the first SCI is less than the first logical channel priority, the first terminal device may determine that the second terminal device does not need to perform LBT on the PSFCH resources corresponding to the data, to determine the first indication information.

In another implementation, the first configuration information includes the SL MAC CE list, and if the data scheduled by using the first SCI includes the one or more SL MAC CEs in the SL MAC CE list, the first terminal device may determine that the second terminal device does not need to perform LBT on the PSFCH resources corresponding to the data, to determine the first indication information.

S203: The first terminal device sends the first SCI to the second terminal device. Correspondingly, the second terminal device receives the first SCI from the first terminal device. The first SCI includes the first indication information.

S204: The second terminal device determines, according to the first indication information, not to perform LBT on the PSFCH resources.

S205: The second terminal device sends HARQ feedback information to the first terminal device by using the PSFCH resources. Correspondingly, the first terminal device receives the HARQ feedback information from the second terminal device by using the PSFCH resources.

For implementation processes of S203 to S205, refer to the specific descriptions of S102 to S104 in the embodiment shown in FIG. 6. Details are not described herein again.

In the embodiment shown in FIG. 7, the first terminal device determines the first indication information based on the first configuration information, and sends the first indication information to the second terminal device, to indicate the second terminal device not to perform LBT on the PSFCH resources corresponding to the current time of data transmission, thereby implementing dynamic indication based on the service priority. The second terminal device does not need to perform LBT on PSFCH resources each time of data transmission, so that power consumption of the second terminal device can be reduced, and data retransmission of the first terminal device due to an LBT failure of the second terminal device can be avoided, thereby improving SL communication quality.

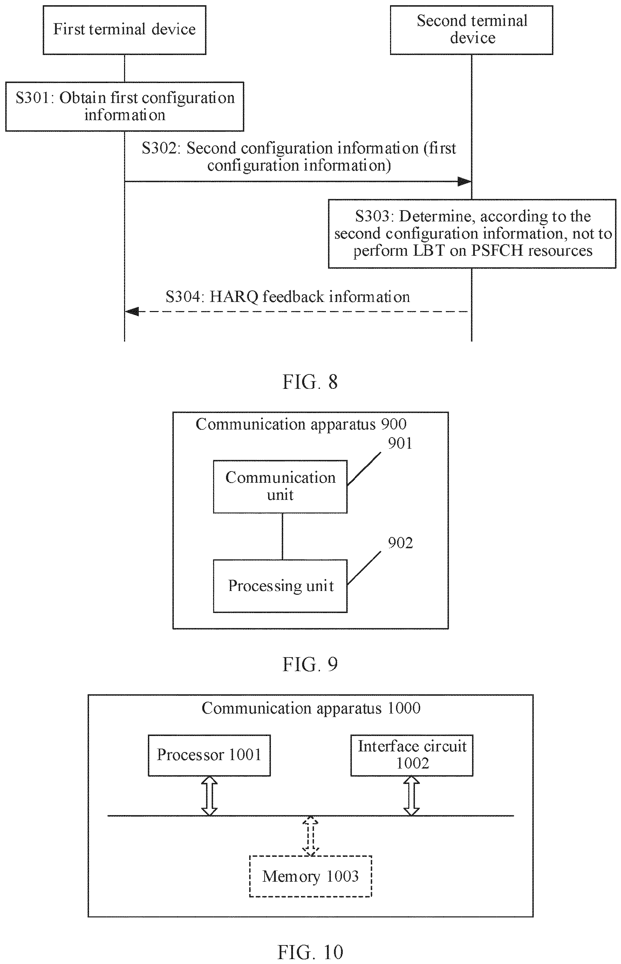

FIG. 8 is a schematic flowchart of still another sidelink communication method according to an embodiment of this application. As shown in FIG. 7, the sidelink communication method includes but is not limited to the following steps.

S301: A first terminal device obtains first configuration information.

For an implementation process of S301, refer to the specific descriptions of S201 in the embodiment shown in FIG. 7. Details are not described herein again.

S302: The first terminal device sends second configuration information to a second terminal device. Correspondingly, the second terminal device receives the second configuration information from the first terminal device. The second configuration information includes the first configuration information.

A difference from the embodiment shown in FIG. 7 lies in that in FIG. 7, the first terminal device determines the first indication information when obtaining the first configuration information, and in FIG. 8, the first terminal device sends the second configuration information to the second terminal device when obtaining the first configuration information, where the second configuration information includes the first configuration information and is used by the second terminal device to determine whether to perform LBT on PSFCH resources. Content included in the second configuration information is the same as that included in the first configuration information.

The first terminal device sends the second configuration information to the second terminal device by using a PC5-RRC message or a group PC5-RRC message, in other words, the second configuration information is carried in the PC5-RRC message or the group PC5-RRC message.

Optionally, the first terminal device further sends data to the second terminal device, where the data may be scheduled by using SCI. A process in which the first terminal device sends the data to the second terminal device may be performed simultaneously with S302, a data sending process is performed before S302, or S302 is performed before a data sending process.

S303: The second terminal device determines, according to the second configuration information, not to perform LBT on the PSFCH resources.

In an implementation, the second configuration information includes a first logical channel priority, and if a minimum logical channel priority in the data is less than the first logical channel priority, the second terminal device may determine not to perform LBT on PSFCH resources corresponding to the data.

In another implementation, the second configuration information includes an SL MAC CE list, and if the data includes one or more SL MAC CEs in the SL MAC CE list, the second terminal device may determine not to perform LBT on PSFCH resources corresponding to the data.

Optionally, in S304, the second terminal device sends HARQ feedback information to the first terminal device by using the PSFCH resources. Correspondingly, the first terminal device receives the HARQ feedback information from the second terminal device by using the PSFCH resources.

When determining not to perform LBT on the PSFCH resources, the second terminal device directly sends the HARQ feedback information to the first terminal device by using the PSFCH resources.

In the embodiment shown in FIG. 8, the first terminal device sends the second configuration information to the second terminal device, so that the second terminal device determines not to perform LBT on PSFCH resources corresponding to a current time of data transmission, so that the second terminal device dynamically does not perform LBT based on a priority. The second terminal device does not need to perform LBT on PSFCH resources each time of data transmission, so that power consumption of the second terminal device can be reduced, and data retransmission of the first terminal device due to an LBT failure of the second terminal device can be avoided, thereby improving SL communication quality.

In the foregoing embodiments, descriptions of embodiments have respective focuses. To avoid redundancy, for a part that is not described in detail in an embodiment, refer to related descriptions in other embodiments.

To implement the sidelink communication method provided in embodiments of this application, the first terminal device and the second terminal device may each include a hardware structure or a software module, to implement the foregoing functions in a form of the hardware structure, the software module, or a combination of the hardware structure and the software module. One of the foregoing functions may be performed through a hardware structure, a software module, or a combination of the hardware structure and the software module. FIG. 9 and FIG. 10 each are a diagram of a structure of a possible communication apparatus according to an embodiment of this application. The communication apparatus may be configured to implement the functions of the first terminal device or the second terminal device in the foregoing method embodiments, and therefore can also implement the beneficial effects in the foregoing method embodiments.

A communication apparatus 900 shown in FIG. 9 may include a communication unit 901 and a processing unit 902. The communication unit 901 may include a sending unit and a receiving unit. The sending unit is configured to implement a sending function, and the receiving unit is configured to implement a receiving function. The communication unit 901 may implement the sending function and/or the receiving function. The communication unit may also be described as a transceiver unit.

The communication apparatus 900 may be a second terminal device, may be an apparatus in the second terminal device, or may be an apparatus having functions of the second terminal device.

In an implementation, the communication apparatus 900 may perform the related operations of the second terminal device in the embodiment shown in FIG. 6 or FIG. 7. The communication unit 901 is configured to receive first SCI from a first terminal device, where the first SCI includes first indication information, and the first indication information is used to determine not to perform LBT on PSFCH resources. The processing unit 902 is configured to determine, according to the first indication information, not to perform LBT on the PSFCH resources. For more detailed descriptions of the processing unit 902 and the communication unit 901, refer to the related descriptions in the embodiment shown in FIG. 6 or FIG. 7.

In another implementation, the communication apparatus 900 may perform the related operations of the second terminal device in the embodiment shown in FIG. 8. The communication unit 901 is configured to receive second configuration information from a first terminal device, where the second configuration information is used to determine not to perform LBT on PSFCH resources. The processing unit 902 is configured to determine, according to the second configuration information, not to perform LBT on the PSFCH resources. For more detailed descriptions of the processing unit 902 and the communication unit 901, refer to the related descriptions in the embodiment shown in FIG. 8.

The communication apparatus 900 may be a first terminal device, may be an apparatus in the first terminal device, or may be an apparatus having functions of the first terminal device.

In an implementation, the communication apparatus 900 may perform the related operations of the first terminal device in the embodiment shown in FIG. 6 or FIG. 7. The processing unit 902 is configured to determine first indication information, where the first indication information is used to determine not to perform LBT on PSFCH resources. The communication unit 901 is configured to send first SCI to a second terminal device, where the first SCI includes the first indication information. For more detailed descriptions of the processing unit 902 and the communication unit 901, refer to the related descriptions in the embodiment shown in FIG. 6 or FIG. 7.

In another implementation, the communication apparatus 900 may perform the related operations of the first terminal device in the embodiment shown in FIG. 8. The processing unit 902 is configured to obtain first configuration information. The communication unit 901 is configured to send second configuration information to a second terminal device, where the second configuration information includes the first configuration information, and the second configuration information is used to determine not to perform LBT on PSFCH resources. For more detailed descriptions of the processing unit 902 and the communication unit 901, refer to the related descriptions in the embodiment shown in FIG. 8.

A communication apparatus 1000 shown in FIG. 10 may include a processor 1001 and an interface circuit 1002. The processor 1001 and the interface circuit 1002 are coupled to each other. It may be understood that the interface circuit 1002 may be an interface circuit or an input/output interface. Optionally, the communication apparatus 1000 may further include a memory 1003, configured to store instructions executed by the processor 1001, store input data required by the processor 1001 to run instructions, or store data generated after the processor 1001 runs instructions.

For example, the communication apparatus 1000 may be a first terminal device. The interface circuit 1002 is configured to perform S102 and S104 in FIG. 6, S201, S203, and S205 in FIG. 7, and S301, S302, and S304 in FIG. 8. The processor 1001 performs S101 in FIG. 6 and S202 in FIG. 7.

For example, the communication apparatus 1000 may be a second terminal device. The interface circuit 1002 is configured to perform S 102 and S104 in FIG. 6, S203 and S205 in FIG. 7, and S302 and S304 in FIG. 8. The processor 1001 performs S103 in FIG. 6, S204 in FIG. 7, and S303 in FIG. 8.

When the communication apparatus is a chip used in a first terminal device, the chip of the first terminal device implements the functions of the first terminal device in the foregoing method embodiments. The chip receives information from another module (for example, a radio frequency module or an antenna) in the first terminal device, where the information is sent by a network device to the first terminal device. Alternatively, the chip sends information to another module (for example, a radio frequency module or an antenna) in the first terminal device, where the information is sent by the first terminal device to a second terminal device.

When the communication apparatus is a chip used in a second terminal device, the chip of the second terminal device implements the functions of the second terminal device in the foregoing method embodiments. The chip receives information from another module (for example, a radio frequency module or an antenna) in the second terminal device, where the information is sent by the second terminal device to a first terminal device. Alternatively, the chip sends information to another module (for example, a radio frequency module or an antenna) in the second terminal device, where the information is sent by the second terminal device to the first terminal device.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to the processor, so that the processor can read information from the storage medium and can write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A sidelink communication method, wherein the method comprises:
receiving first sidelink control information SCI from a first terminal device, wherein the first SCI comprises first indication information, and the first indication information is used to determine not to perform listen before talk LBT on physical sidelink feedback channel PSFCH resources; and
determining, according to the first indication information, not to perform LBT on the PSFCH resources.

2. The method according to claim 1, wherein the first indication information indicates not to perform LBT on the PSFCH resources.

3. The method according to claim 1 or 2, wherein after the determining not to perform LBT on the PSFCH resources, the method further comprises:
sending hybrid automatic repeat request HARQ feedback information to the first terminal device by using the PSFCH resources.

4. The method according to claim 1 or 2, wherein the first indication information indicates not to send HARQ feedback information; or the first SCI further comprises second indication information, and the second indication information indicates not to send HARQ feedback information; and
the method further comprises:
skipping sending the HARQ feedback information to the first terminal device.

5. The method according to any one of claims 1 to 4, wherein the first indication information is further used to determine that LBT does not need to be performed on physical sidelink control channel PSCCH resources and/or physical sidelink shared channel PSSCH resources occupied by the first SCI; or the first SCI further comprises third indication information, and the third indication information is used to determine that LBT does not need to be performed on PSCCH resources and/or PSSCH resources occupied by the first SCI; and the method further comprises:
sending second SCI to a third terminal device by using the PSCCH resources and/or the PSSCH resources; and/or
sending data to the third terminal device by using the PSSCH resources.

6. The method according to any one of claims 1 to 4, wherein the first SCI comprises first stage SCI and second stage SCI, and the first stage SCI or the second stage SCI comprises the first indication information.

7. A sidelink communication method, wherein the method comprises:
determining first indication information, wherein the first indication information is used to determine not to perform LBT on PSFCH resources; and
sending first SCI to a second terminal device, wherein the first SCI comprises the first indication information.

8. The method according to claim 7, wherein the first indication information indicates not to perform LBT on the PSFCH resources.

9. The method according to claim 7 or 8, wherein the determining first indication information comprises:
determining the first indication information when gap resources are occupied, wherein the gap resources are resources between PSSCH resources and the PSFCH resources.

10. The method according to claim 7 or 8, wherein the determining first indication information comprises:
determining the first indication information when a priority of receiving HARQ feedback information is relatively low.

11. The method according to claim 10, wherein the first indication information indicates not to send the HARQ feedback information; or the first SCI further comprises second indication information, and the second indication information indicates not to send the HARQ feedback information.

12. The method according to any one of claims 7 to 11, wherein the first indication information is further used to determine that LBT does not need to be performed on PSCCH resources and/or PSSCH resources occupied by the first SCI; or the first SCI further comprises third indication information, and the third indication information is used to determine that LBT does not need to be performed on PSCCH resources and/or PSSCH resources occupied by the first SCI.

13. The method according to claim 7 or 8, wherein the method further comprises:
obtaining first configuration information; and
the determining first indication information comprises:
determining the first indication information based on the first configuration information.

14. The method according to claim 13, wherein the first configuration information comprises a first logical channel priority; and
the determining the first indication information based on the first configuration information comprises:
determining the first indication information if a minimum logical channel priority in data scheduled by using the first SCI is less than the first logical channel priority.

15. The method according to claim 13, wherein the first configuration information comprises a sidelink media access control control element SL MAC CE list; and
the determining the first indication information based on the first configuration information comprises:
determining the first indication information if data scheduled by using the first SCI comprises one or more SL MAC CEs in the SL MAC CE list.

16. The method according to any one of claims 13 to 15, wherein the obtaining first configuration information comprises:
receiving a radio resource control RRC message or a system information block SIB message from a network device, wherein the RRC message or the SIB message comprises the first configuration information;
obtaining the first configuration information from a preconfigured message; or
obtaining the first configuration information from a predefined message.

17. The method according to any one of claims 7 to 16, wherein the first SCI comprises first stage SCI and second stage SCI, and the first stage SCI or the second stage SCI comprises the first indication information.

18. A sidelink communication method, wherein the method comprises:
receiving second configuration information from a first terminal device, wherein the second configuration information is used to determine not to perform LBT on PSFCH resources; and
determining, according to the second configuration information, not to perform LBT on the PSFCH resources.

19. The method according to claim 18, wherein the method further comprises:
receiving data from the first terminal device; and
the determining, according to the second configuration information, not to perform LBT on the PSFCH resources comprises:
if the second configuration information comprises a first logical channel priority, and a minimum logical channel priority in the data is less than the first logical channel priority, determining not to perform LBT on the PSFCH resources.

20. The method according to claim 18, wherein the method further comprises:
receiving data from the first terminal device; and
the determining, according to the second configuration information, not to perform LBT on the PSFCH resources comprises:
if the second configuration information comprises an SLMAC CE list, and the data compri ses one or more SL MAC CEs in the SL MAC CE list, determining not to perform LBT on the PSFCH resources.

21. The method according to any one of claims 16 to 18, wherein the receiving second configuration information from a first terminal device comprises:
receiving a PC5-RRC message or a group PC5-RRC message from the first terminal device, wherein the PC5-RRC message or the group PC5-RRC message comprises the second configuration information.

22. A sidelink communication method, wherein the method comprises:
obtaining first configuration information; and
sending second configuration information to a second terminal device, wherein the second configuration information comprises the first configuration information, and the second configuration information is used to determine not to perform LBT on PSFCH resources.

23. The method according to claim 22, wherein the obtaining first configuration information comprises:
receiving an RRC message or a SIB message from a network device, wherein the RRC message or the SIB message comprises the first configuration information;
obtaining the first configuration information from a preconfigured message; or
obtaining the first configuration information from a predefined message.

24. The method according to claim 22, wherein the sending second configuration information to a second terminal device comprises:
sending a PC5-RRC message or a group PC5-RRC message to the second terminal device, wherein the PC5-RRC message or the group PC5-RRC message comprises the second configuration information.

25. A communication apparatus, comprising modules configured to perform the method according to any one of claims 1 to 6, modules configured to perform the method according to any one of claims 7 to 17, modules configured to perform the method according to any one of claims 18 to 21, or modules configured to perform the method according to any one of claims 22 to 24.

26. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 6, the method according to any one of claims 7 to 17, the method according to any one of claims 18 to 21, or the method according to any one of claims 22 to 24 by using a logic circuit or by executing code instructi ons.

27. A computer-readable storage medium, wherein the storage medium stores a computer program or instructions, and when the computer program or instructions are executed by a communication apparatus, the method according to any one of claims 1 to 6, the method according to any one of claims 7 to 17, the method according to any one of claims 18 to 21, or the method according to any one of claims 22 to 24 is implemented.
